(19) Europäisches Patentamt
European Patent Office
Office européen des brevets

(11) **EP 2 293 487 A1**

(12) **EUROPEAN PATENT APPLICATION**

(43) Date of publication:
**09.03.2011 Bulletin 2011/10**

(51) Int Cl.:
**H04L 9/06** $^{(2006.01)}$

(21) Application number: **10305196.7**

(22) Date of filing: **26.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **08.09.2009 EP 09305823**

(71) Applicant: **Thomson Licensing**
**92130 Issy-les-Moulineaux (FR)**

(72) Inventors:
• **Karroumi, Mohamed**
  **92443 Issy Les Moulineaux (FR)**
• **Grevin, Amaël**
  **92443 Issy Les Moulineaux (FR)**

(74) Representative: **Ruellan-Lemonnier, Brigitte et al**
**Technicolor**
**1-5 rue Jeanne d'Arc**
**92130 Issy-les-Moulineaux (FR)**

(54) **A method of diversification of a round function of an encryption algorithm**

(57)     A method of diversification of an iterative function of an encryption algorithm. During an iteration at least one parameter other than an encryption key and an input message is modified. It is particularly advantageous that the encryption algorithm is the Advanced Encryption Standard.

Figure 2 (prior art)

Figure 3 (prior art)

**Description**

<u>TECHNICAL FIELD</u>

The present invention relates generally to cryptography, and more particularly to an algorithm for encryption and/or decryption of data.

<u>BACKGROUND</u>

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A copy protection system intended to run on a malicious host is, by definition, prone to reverse engineering attacks because the adversary is able to view the programs execution and intermediate results generated during computation. The so-called white-box attack context was introduced as a setting where the adversary is allowed to make observations about the software and to examine or alter the software intermediate results; see S. Chow, P. Eisen, H. Johnson, P.C. van Oorschot, "A White-Box DES Implementation for DRM Application", Digital Rights Managerment WorkShop-DRM 2002, Lecture Notes in Computer Science, vol. 2696, 2003, pp. 1-15.

In order to protect the Advanced Encryption Standard (AES) in such a context, Chow et al. implemented a white-box AES encryption algorithm; see S. Chow, P. Eisen, H. Johnson, P.C. van Oorschot, "White-Box Cryptography and an AES Implementation", Selected Areas in Cryptography-SAC 2002, Lecture Notes in Computer Science, vol. 2595, 2003, pp. 250-270. However, Billet et al. showed that the secret key can be extracted from Chow's implementation with time complexity of $2^{30}$; see O. Billet, H. Gilbert, C. Ech-Chatbi, , "Cryptanalysis of a White Box AES Implementation", Selected Areas in Cryptography-SAC 2004, Lecture Notes in Computer Science, vol. 3357, In H. Handschuh, A. Hasan (eds.), 2005, pp. 227-240.

It can therefore be appreciated that there is a need for a solution that provides a white-box version of AES that is less vulnerable to Billet's attack. The present invention provides such a solution.

In order to facilitate understanding of the present invention, AES, its white-box implementation and Billet's attack will now be described.

<u>AES description</u>

AES is a standard for data encryption, at present with three versions, depending on the key length: 128 bits, 192 bits or 256 bits. The block length, i.e. the length of a basic unit of cleartext and later ciphertext, is 128 bits, and a block is represented as a (4x4) matrix of bytes, called a *state.* AES operates over the algebraic Galois field $GF(2^8)$. The reason is computational efficiency, as $GF(2^8)$ elements can be represented by bytes, which can be easily processed by computers. Without loss of generality, the description hereinafter will focus on the 128-bit version of AES, i.e. AES-128.

The AES-128 algorithm comprises 10 iterations, called rounds, that each performs four transformations:

**SubBytes:** This transformation takes the multiplicative inverse of the input in $GF(2^8)$ modulo the irreducible polynomial of AES $x^8 + x^4 + x^3 + x + 1$, the output of which is transformed by the affine transformation:

$$\begin{bmatrix} y_0 \\ y_1 \\ y_2 \\ y_3 \\ y_4 \\ y_5 \\ y_6 \\ y_7 \end{bmatrix} \leftarrow \begin{bmatrix} 1 & 0 & 0 & 0 & 1 & 1 & 1 & 1 \\ 1 & 1 & 0 & 0 & 0 & 1 & 1 & 1 \\ 1 & 1 & 1 & 0 & 0 & 0 & 1 & 1 \\ 1 & 1 & 1 & 1 & 0 & 0 & 0 & 1 \\ 1 & 1 & 1 & 1 & 1 & 0 & 0 & 0 \\ 0 & 1 & 1 & 1 & 1 & 1 & 0 & 0 \\ 0 & 0 & 1 & 1 & 1 & 1 & 1 & 0 \\ 0 & 0 & 0 & 1 & 1 & 1 & 1 & 1 \end{bmatrix} \cdot \begin{bmatrix} x_0 \\ x_1 \\ x_2 \\ x_3 \\ x_4 \\ x_5 \\ x_6 \\ x_7 \end{bmatrix} + \begin{bmatrix} 1 \\ 1 \\ 0 \\ 0 \\ 0 \\ 1 \\ 1 \\ 0 \end{bmatrix}$$

**ShiftRows:** This transformation is a byte transposition that cyclically shifts each row of the state by respectively 0, 1, 2 and 3 positions to the left.

**MixColumns:** This transformation operates on the columns of the state. It is a multiplication of the column by the polynomial $mc(x) = 03.x^3 + 01.x^2 + 01.x + 02$ in $GF(2^8)^4$ modulo the polynomial $x^4 + 1$. This can be described by a matrix multiplication (the matrix being denoted MC):

$$\begin{bmatrix} x_0 \\ x_1 \\ x_2 \\ x_3 \end{bmatrix} \leftarrow \begin{bmatrix} 02 & 03 & 01 & 01 \\ 01 & 02 & 03 & 01 \\ 01 & 01 & 02 & 03 \\ 03 & 01 & 01 & 02 \end{bmatrix} \cdot \begin{bmatrix} x_0 \\ x_1 \\ x_2 \\ x_3 \end{bmatrix}$$

**AddRoundKey:** This transformation is an XOR operation with the round key, i.e. the key used for the particular round.

Put another way, if $X$ is the state, each round consists of:

$X \leftarrow$ SubBytes($X$)
$X \leftarrow$ ShiftRows($X$)
$X \leftarrow$ MixColumns($X$)
$X \leftarrow$ AddRoundKey($X, K_i$)
where $K_i$ denotes the round key i.

The AES$^{-1}$ algorithm, i.e. the corresponding decryption algorithm, works in the reverse direction by using the inverses of the steps: InvSubBytes, InvShiftRows, InvMixColumns and AddRoundKey. A complete description (including test vectors) can be found in National Institute of Standards and Technology (NIST): Advanced Encryption standard (AES), FIPS Publication 197, 2001. Available at URL http://csrc.nist.gov/publications/fips/fips197/fips-197.pdf.

White-box implementation

The strategy of the white-box implementation of AES, WB-AES, is to convert AES into a series of look-ups in key-dependent look-up tables and to hide the secret keys in these tables. Each table is composed of several steps of the AES and encoded with random bijections.

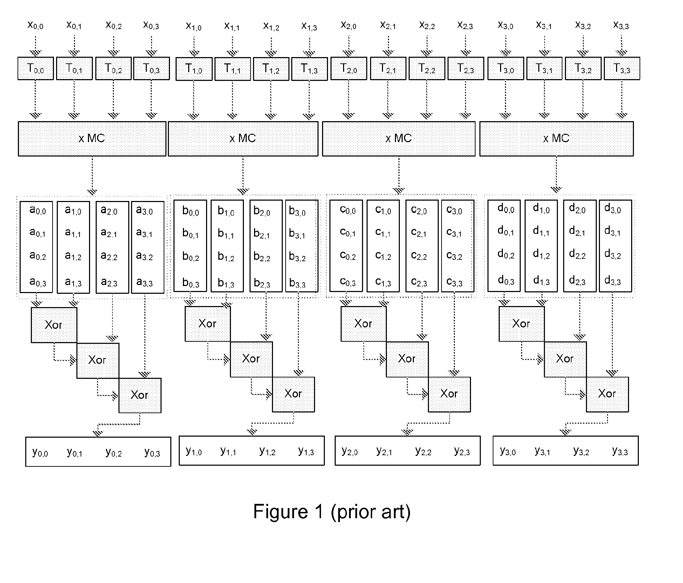

Figure 1 illustrates a round of WB-AES before random bijections encoding (ShiftRows is omitted). Compared to 'ordinary' AES, the operations of the WB-AES rounds are slightly changed without impacting the input or the output. AddRoundKey and SubBytes of the next round are combined into one step, and the subkey (calculated using AES key schedule) is integrated into SubBytes by creating bytes input/output look-up tables $^rT$ of round r.

$$^{r}T_{i,j}(x) = S\big(x \oplus\ ^{r}K_{i,j}\big) \qquad\qquad r = 1, \ldots, 9\ \ i, j = 0, \ldots, 3$$

$$^{10}T_{i,j}(x) = S\big(x \oplus\ ^{9}K_{i,j}\big) \oplus\ ^{10}K_{i,j} \qquad i, j = 0, \ldots, 3$$

where S is the AES S-box and $K$ is the AES subkey.

MixColumns operates on the AES state one column at a time. This can be implemented by multiplying a $32{\times}32$ matrix $MC$ (thereafter MixColumns matrix) and a $32{\times}1$ vector. Multiplication of a 32-bits vector by $MC$ is done by four separate multiplications and three 32-bits XORs. ShiftRows is implemented by providing shifted input data to the generated tables.

WB-AES generally uses external and internal encodings. External encoding permits the shielding of the implementation:

$$G \circ E_K \circ F^{-1} \leftrightarrow F \circ E_K^{-1} \circ G^{-1}$$

If external encoding is applied to the encryption operation, inverse encoding should be applied to the decryption operation and vice-versa. Otherwise, decryption cannot be possible.

Internal encoding randomizes the data flow between consecutive look-up tables. For the sake of clarity, the description only considers internal encodings to give the general idea and to provide information necessary for the understanding of Billet's attack.

Let us consider AES as a composition of 10 functions as follows:

$$E = R_1 \circ R_2 \circ \cdots \circ R_9 \circ R_{10}$$

where $R_i$ represents the operations of an entire AES round coded as a look-up table. A table is delinearized using random permutations $P_i$. The idea is to compose a round of AES operations by inserting a $P_i$ that is annihilated in the next round:

$$E = \underbrace{R_1 \circ P_1}_{OT_1} \circ \underbrace{P_1^{-1} \circ R_2 \circ P_2}_{OT_2} \circ P_2^{-1} \circ \cdots \circ P_8 \circ \underbrace{P_8^{-1} \circ R_9 \circ P_9}_{OT_9} \circ \underbrace{P_9^{-1} \circ R_{10}}_{OT_{10}}$$

AES then becomes a composition of 10 obfuscated tables $OT_i$.

This delinearization step prevents an adversary from viewing the contents of each table. It is then more difficult to extract the keys by inspecting the obfuscated tables $OT_i$.

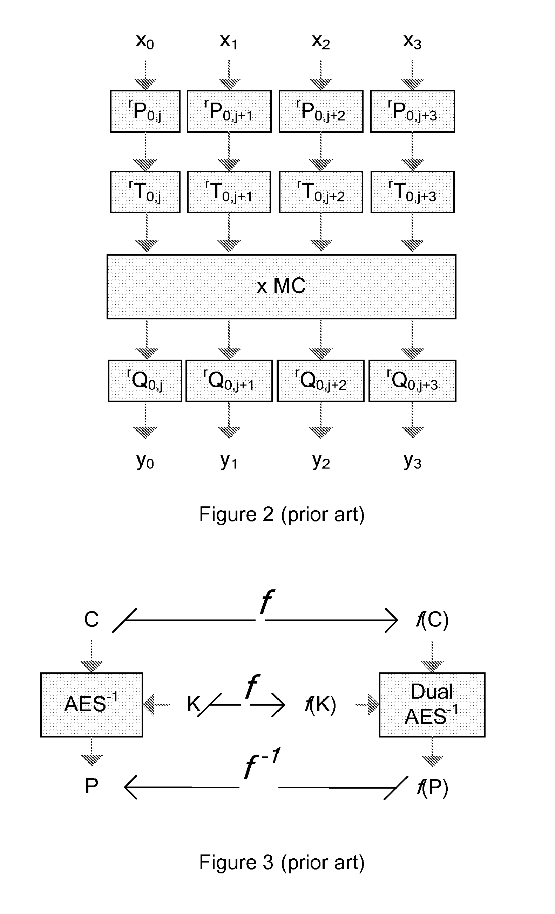

In detail, the obfuscation, illustrated in Figure 2, works on a byte and each round is composed by four mappings. A mapping may be viewed as a table where $^{r}P_{i,j}$ (resp. $^{r}Q_{i,j}$) is the encoding of a byte using random bijections. $^{r}P_{i,j}$ and $^{r}Q_{i,j}$ cancel each other between two consecutive rounds. In other words:

$$^{r}Q_{i,j} = inv\big(^{r+1}P_{i,j}\big) \qquad\qquad i, j = 0, \ldots, 3$$

Billet's attack

A full description of the attack is found in the paper mentioned hereinbefore. What follows is a simplified description that allows an understanding of the present invention.

Since it is difficult to extract the keys by local inspections of the obfuscated tables, it is more convenient to look at the input and the output of the composition of tables for a round. The attack comprises 5 steps:

1. Recover non-linear parts of all $P$-boxes and $Q$-boxes of a round $r$ by analyzing their input and output.
2. Remove $P$ and $Q$ non-linear parts thereby making them unknown affine mappings.
3. Recover the affine mappings.
4. Once the affine mappings are recovered, the bytes of a subkey round (embedded in $T$-boxes) can be retrieved. The bytes are however in a shuffled order.
5. Repeat step 1 to 4 for the next round $r+1$. This makes it possible to get another shuffled subkey. Constraints in the AES key schedule algorithm enable retrieving both subkeys in correct order. The AES master key can be recovered knowing only one subkey.

To recover the affine mappings $^rQ_{i,j}$, it is first necessary to retrieve the affine mappings $^rQ_{i,0} = A_i \oplus q_i$, where $A_i$ is linear and $q_i$ is a constant. The mappings $^rQ_{i,0}$ for a vector $(x,0,0,0)$ can be written as:

$$^rQ_{i,O}(x,0,0,0) = y_i(x,0,0,0) = A_i\left(\alpha_{i,0}\ ^rT_{i,0}\left(\ ^rP_{i,0}(x)\right) \oplus\ ^rK_{i,0}\right) \oplus q_i \qquad i = 0,\dots,3$$

where $\alpha_{i,0}$, with $i = 0,\dots,3$ are MixColumns coefficients.

This can be rewritten as an $x$ function, and for $i=0$ this gives:

$$x \mapsto \left(S^{-1} \circ \Lambda_{\delta_j} \circ A_0^{-1}\right)\left(y_0(x,0,0,0) \oplus c_j\right) =\ ^rP_{0,0}(x) \oplus\ ^rK_{0,0}$$

where S is the AES S-Box. $\Lambda_\delta$ is the matrix over GF($2^8$) of multiplication by $\delta$. $(\delta_j,\ c_j)$ are unknown constants. The value of $\delta_j^{-1}$ depends on MixColumns coefficients.

$$MC = \begin{pmatrix} \alpha_{0,0} & \alpha_{1,0} & \alpha_{2,0} & \alpha_{3,0} \\ \alpha_{0,1} & \alpha_{1,1} & \alpha_{2,1} & \alpha_{3,1} \\ \alpha_{0,2} & \alpha_{1,2} & \alpha_{2,2} & \alpha_{3,2} \\ \alpha_{0,3} & \alpha_{1,3} & \alpha_{2,3} & \alpha_{3,3} \end{pmatrix} = \begin{pmatrix} 02 & 01 & 01 & 03 \\ 03 & 02 & 01 & 01 \\ 01 & 03 & 02 & 01 \\ 01 & 01 & 03 & 02 \end{pmatrix}$$

The unique pair $(\delta_j,\ c_j)$ in these mappings can be computed with a time complexity of $2^{24}$, provided that the inverse AES S-box and MixColumns coefficients are known. Indeed, given that two of $\alpha_{j,0}$ are 01, the other one is 02 and the last is 03, exactly two of $\delta_j^{-1}$ are equal. It is thus possible to get $\Lambda_{\delta_j}$ and then $A_0$. The constant $q_i$ of the affine mapping $^rQ_{i,0}$ can be recovered at the same time.

All $^rQ_{i,j}$ can be recovered thanks to the mappings described above. As $^rQ_{i,j} = \text{inv}(^{r+1}P_{i,j})$, $^{r+1}P_{i,j}$ is recovered at the same time. The subkey embedded in the T-box can then be extracted.

## SUMMARY OF INVENTION

In a first aspect, the invention is directed to a method for performing a cryptographic computation on digital data, the cryptographic computation being encryption or decryption, performed in a device executing a block cipher algorithm comprising n rounds. For each round, the device receives a round input, operates on the round input in a finite field to generate a round output, and outputs the round output. For at least one round the finite field is a first finite field and for at least another round the finite field is a second finite field, different from the first finite field.

In a first preferred embodiment, the choice of the finite fields diversifies intermediate round output of a reference block cipher algorithm and the round output of round n is equal to a round output of round n of the reference block cipher algorithm.

In a second preferred embodiment, the second finite field is randomly chosen from a predefined set of finite fields. It is advantageous that the finite fields are represented by irreducible polynomials.

In a third preferred embodiment, the finite field is chosen randomly for each round. It is advantageous that the round output of at least one round is transformed to obtain a representation in the finite field of the following round.

In a fourth preferred embodiment, prior to at least one round, a transformation function is applied to transform the round input into a representation in the finite field.

In a fifth preferred embodiment, a transformation is performed on the round output.

In a sixth preferred embodiment, in each round, a sub-key for the round is used to operate on the round input. It is advantageous that the round sub-key is transformed for at least one round. It is also advantageous that the round sub-key is obtained from a main key directly represented in the finite field used in the corresponding round.

In a seventh preferred embodiment, the block cipher algorithm is the Advanced Encryption Standard.

In a second aspect, the invention is directed to a device for performing a cryptographic computation on digital data, the cryptographic computation being encryption or decryption performed using a block cipher algorithm comprising n rounds. The device comprises a processor for, for each round, receive a round input, operate on the round input in a finite field to generate a round output, and output the round output. The processor is adapted to use a first finite field for at least one round and a second finite field, different from the first finite field, for at least another round.

In a third aspect, the invention is directed to a computer program product storing thereon instructions that, when executed by a processor, performs the method the first aspect.

BRIEF DESCRIPTION OF DRAWINGS

Preferred features of the present invention will now be described, by way of non-limiting example, with reference to the accompanying drawings, in which

Figure 1, already described, illustrates a round of prior art before random bijections encoding;
Figure 2, already described, illustrates obfuscation in White-box AES according to the prior art;
Figure 3 illustrates dual cipher decryption according to the prior art;
Figure 4 illustrates one of the four obfuscated mappings in a round according to the first preferred embodiment of the present invention; and
Figure 5 illustrates a cryptographic device according to a preferred embodiment of the present invention.

DESCRIPTION OF EMBODIMENTS

Billet's attack supposes that classical AES constants such as S-box values or MixColumns coefficients are known. In for example the MixColumns matrix, each column consists of the four numbers 01, 01, 02, 03, which is helpful in removing the obfuscations. A main inventive idea of the present invention is thus to make the S-box values and the MixColumns coefficients unknown to the attacker. The present invention can then thwart Billet's attack.

AES is a block cipher system based on simple algebraic operations over the algebraic finite field $GF(2^8)$. If we replace all the constants in Rijndael - of which AES is a subgroup - including replacement of the irreducible polynomial, coefficients of the MixColumns matrix, and affine transformation in the SubBytes, it is possible to create new dual ciphers of AES. It is mentioned by E. Barkan and E. Biham in "In How Many Ways Can You Write Rijndael?" Asiacrypt 2002, pp.160-175, 2002, that 240 new dual ciphers of AES can be created. Although the intermediate values of a dual cipher during encryption or decryption are different from those of AES, a dual cipher has a security equivalent to that of AES. While these dual ciphers have been known for quite some time, they have, until now, been regarded as a kind of scientific curiosity without any real practical use.

The outputs of AES and dual AES are also different but correlated, as shown in Figure 3 that illustrates dual cipher decryption. The correlation means that if P is the plaintext, K is the key, and encryption result (i.e. the ciphertext) with the original AES is C, then encrypting P' = f(P) under the key K'= f(K) using the dual cipher is necessarily f(C). According to this relation, it is possible to construct a white-box using a dual AES instead of the classical AES.

A dual cipher for AES can be created either by modifying original AES constants or by changing the irreducible polynomial. An example of modification of constants is to raise the constants to their second power: affine transformation $A.x + b$ of SubBytes operation is replaced by $A^2.x + b^2$. The polynomial $mc(x) = 03.x^3 + 01.x^2 + 01.x + 02$ of MixColumns can be replaced by $mc(x) = 05.x^3 + 01.x^2 + 01.x + 04$. There are eight possible modifications for a given irreducible polynomial, they raise constants to power 2, 4, 6, 16, 32, and 64.

The irreducible polynomial in AES is used for the inverse computation in the S-box and also in the multiplication in MixColumns. There are 30 irreducible polynomials in $GF(2^8)$. Due to the isomorphism of all fields of $GF(2^8)$, AES can use any of the 30 irreducible polynomials. There are therefore 30*8 = 240 AES dual ciphers. To be compatible with original AES, the cleartext, the ciphertext and key must be modified trough a linear transformation $f$. This transforms an AES under an irreducible polynomial to another AES with another polynomial. The transformation is generally represented by a matrix $R$ ($f(x) = R.x$ where $x$ is a vector representation under original AES polynomial). For example, if AES polynomial $x^8 + x^4 + x^3 + x + 1$ is replaced by $x^8 + x^4 + x^3 + x^2 + 1$ the invertible matrix R is:

$$R = R^{-1} = \begin{bmatrix} 1 & 1 & 1 & 1 & 1 & 1 & 1 & 1 \\ 0 & 1 & 0 & 1 & 0 & 1 & 0 & 1 \\ 0 & 0 & 1 & 1 & 0 & 0 & 1 & 1 \\ 0 & 0 & 0 & 1 & 0 & 0 & 0 & 1 \\ 0 & 0 & 0 & 0 & 1 & 1 & 1 & 1 \\ 0 & 0 & 0 & 0 & 0 & 1 & 0 & 1 \\ 0 & 0 & 0 & 0 & 0 & 0 & 1 & 1 \\ 0 & 0 & 0 & 0 & 0 & 0 & 0 & 1 \end{bmatrix};$$

The inverse transformation is defined by $f^{-1}(y) = R^{-1}.y$

The choice of irreducible polynomial in AES is arbitrary and from security perspective there is no advantage of using the original polynomial rather than any other existing polynomial.

To counter Billet's attack, the idea is to choose randomly one of the 240 cipher dual AES to implement instead of the classical AES. This means that the values of the S-box and MixColumns coefficients are not fixed but vary depending on which dual cipher is used.

In a first preferred embodiment, this is implemented by including $f$ in the construction of the T-boxes. Random bijections are next added on top of the newly created T-boxes called $_fT_{i,j}$. As the function $f$ operates on bytes, this gives the following relations:

$$x \leftarrow f(x)$$

$$_f^rT_{i,j}(x) = S_f\left(x \oplus {}_f^rK_{i,j}\right) \qquad r = 1,\dots,9 \quad i,j = 0,\dots,3$$

$$_f^{10}T_{i,j}(x) = S_f\left(x \oplus {}_f^9K_{i,j}\right) \oplus {}_f^{10}K_{i,j} \qquad i,j = 0,\dots,3$$

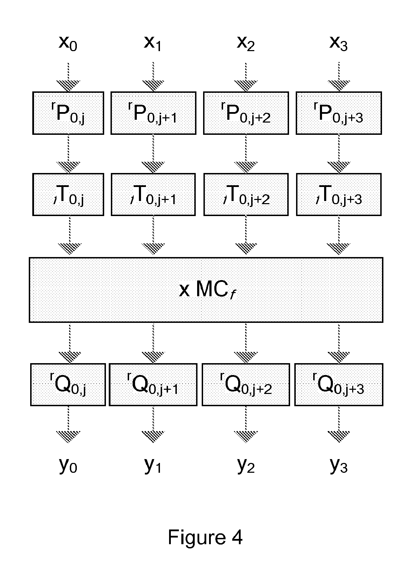

Figure 4 illustrates one of the four obfuscated mappings in a round according to the first preferred embodiment of the present invention.

In the prior art white-box implementation, i.e. the one provided by Chow et al., the unique pair $(\delta_j, c_j)$ can be computed with time complexity of $2^{24}$. When a random dual cipher is used, to compute $(\delta_j, c_j)$, all 240 possible values of S-box and MixColumns coefficients have to be tested. This raises the complexity to $240*2^{24} \approx 2^{32}$.

While the solution of the first preferred embodiment increases the complexity of the attack, it does not prevent recovery of the AES master key, as the operation in step 5 of the attack still is possible. The second preferred embodiment described hereinafter provides a better countermeasure.

To be more resistant to Billet's attack, it is possible to use a plurality of dual AES and integrate their parameters into the same white-box AES implementation. This may be done using a different dual AES for each round of the encryption process. In the following, a round of a dual AES is called a "dual round".

As in the first preferred embodiment, a main idea is to choose randomly 10 dual ciphers amongst the 240 available. Let $(f_1, f_2, \dots, f_{10})$ be the linear transformations associated with the chosen dual AES.

Also, consider AES as a composition of 10 rounds as follows:

$$E = R_1 \circ R_2 \circ \cdots \circ R_9 \circ R_{10}$$

The idea is thus to compose 10 dual rounds in the same AES implementation wherein the rounds preferably are different. This may be done by first taking a round operations $R_i$ in each dual cipher $E^{(k)}$. Let $_kR_i$ be round $i$ of dual cipher $E^{(k)}$. The idea is to apply a state transformation for a round in the previous round. The mechanism is based on an input-decoding-output-encoding paradigm, performed by applying the inverse transformation of a round output followed by the linear transformation for the input of next dual round. Therefore, both the inverse transformation $f_k^{-1}$ and the transformation $f_{k+1}$ are applied in round $_kR_i$:

$$E = \underbrace{{}_1R_1 \circ f_1^{-1} \circ f_2}_{DT_1} \circ \underbrace{{}_2R_2 \circ f_2^{-1} \circ f_3}_{DT_2} \circ \cdots \circ f_9 \circ \underbrace{{}_9R_9 \circ f_9^{-1} \circ f_{10}}_{DT_9} \circ \underbrace{{}_{10}R_{10} \circ f_{10}^{-1}}_{DT_{10}}$$

AES then becomes a composition of 10 dual look-up tables $DT_i$.

The implementation of the white-box is preferably performed by including $f_k$ in the construction of the T-boxes.

$$x \leftarrow f_1(x)$$

$${}_k^r T_{i,j}(x) = f_{k+1}\left(f_k^{-1}\left(S_k\left(x \oplus {}_k^r K_{i,j}\right)\right)\right) \quad r = 1,\ldots,9 \quad i,j = 0,\ldots,3, k = 1,\ldots 9$$

$${}_{10}^{10} T_{i,j}(x) = f_{10}\left(f_9^{-1}\left(S_9\left(x \oplus {}_9^9 K_{i,j}\right)\right)\right) \oplus {}_{10}^{10} K_{i,j} \quad i,j = 0,\ldots,3$$

Random bijections are then added on top of the newly created $_kT_{i,j}$ boxes.

One of the advantages of this solution is that the keys of two consecutive rounds are not correlated. The AES key schedule is based on the S-box value and other constants, and each dual cipher has its own different constants. From the same master key, different subkeys are thus derived for the different dual AES.

Supposing that an attacker manages to guess one dual round, i.e. he knows the S-box and MixColumns coefficients. Then he is able to perform step 1 to step 4 of the attack (with time complexity of at least $2^{24}$) and get a shuffled subkey. However, the bytes of a subkey round cannot be reconstructed correctly as the attacker has no way of testing it (since the subkeys of two consecutive rounds are not correlated). Thus, the attacker has 1 chance in $2^{44}$ (number of possible keys is $16! \approx 2^{44}$) to obtain the correct subkey, but no way to verify if the subkey is correct. Billet's attack would hence require at least $2^{44}$ more computation steps and thus the complexity of the entire attack becomes $2^{74}$.

It has thus been shown how to implement 10 different dual rounds in the same white-box AES. The skilled person will appreciate that it is possible to use even more dual ciphers. For instance, one dual cipher encoding may be used for each of the four mappings in a round, which means that up to $4^*10 = 40$ different dual ciphers can be used in a white-box AES implementation. The higher the number of used dual cipher encodings, the stronger the security of the white-box implementation.

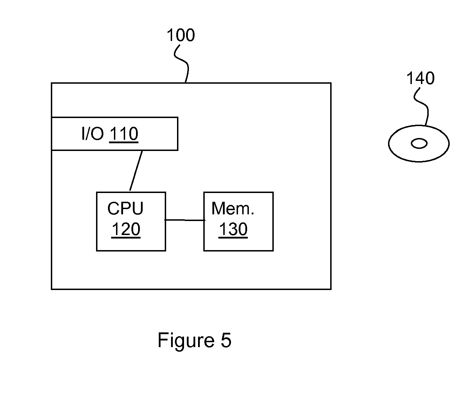

Figure 5 illustrates a cryptographic device according to a preferred embodiment of the present invention. The device 100 comprises at least one interface unit 110 adapted for communication with other devices (not shown), at least one processor 120 and at least one memory 130 adapted for storing data. The processor 120 is adapted to perform dual AES cryptographic operations according to any of the first and second embodiments of the inventive methods, as previously described herein. A computer program product 140 such as a CD-ROM or a DVD comprises stored instructions that, when executed by the processor 120, performs the method according to any of the embodiments of the present invention.

It will thus be appreciated that the present invention can offer a white-box AES implementation that is more secure than the prior art solutions. It will also be appreciated that the present invention is limited to neither white-box implementations nor AES, but that other implementations and encryption algorithms may also be used.

Each feature disclosed in the description and (where appropriate) the claims and drawings may be provided independently or in any appropriate combination. Reference numerals appearing in the claims are by way of illustration only and shall have no limiting effect on the scope of the claims.

**Claims**

1. A method for performing a cryptographic computation on digital data, the cryptographic computation being encryption or decryption, performed in a device (100) executing a block cipher algorithm comprising n rounds, the method comprising the steps for each round, in the device (100), of:

   receiving a round input;
   operating on the round input in a finite field to generate a round output;
   and
   outputting the round output;
   **characterized in that**:
   for at least one round the finite field is a first finite field and for at least another round the finite field is a second finite field, different from the first finite field.

2. The method of claim 1, wherein the choice of the finite fields diversifies intermediate round output of a reference block cipher algorithm, and wherein the round output of round n is equal to a round output of round n of the reference block cipher algorithm.

3. The method of claim 1, further comprising the step of randomly choosing the second finite field from a predefined set of finite fields.

4. The method of claim 3, wherein the finite fields are represented by irreducible polynomials.

5. The method of any one of the previous claims, wherein the finite field is chosen randomly for each round.

6. The method of claim 5, further comprising the step of transforming the round output of at least one round to obtain a representation in the finite field of the following round.

7. The method of any one of the previous claims, further comprising the step of, prior to at least one round, applying a transformation function to transform the round input into a representation in the finite field.

8. The method of any one of the previous claims, further comprising the step of performing a transformation on the round output.

9. The method of any one of the previous claims, wherein, in each round, a sub-key for the round is used to operate on the round input.

10. The method of claim 9, further comprising the step for at least one round of performing a transformation on the round sub-key.

11. The method of claim 9, wherein the round sub-key is obtained from a main key directly represented in the finite field used in the corresponding round.

12. The method of claim 1, wherein the block cipher algorithm is the Advanced Encryption Standard.

13. A device (100) for performing a cryptographic computation on digital data, the cryptographic computation being encryption or decryption performed using a block cipher algorithm comprising n rounds, the device (100) comprising a processor (120) for:

   for each round:

   receiving a round input;
   operating on the round input in a finite field to generate a round output;
   and

outputting the round output;

**characterized in that** the processor is adapted to use a first finite field for at least one round and a second finite field, different from the first finite field, for at least another round.

14. A computer program product (140) storing thereon instructions that, when executed by a processor, performs the method of any one of claims 1 to 12.

Figure 1 (prior art)

$x_0$     $x_1$     $x_2$     $x_3$

| ${}^rP_{0,j}$ | ${}^rP_{0,j+1}$ | ${}^rP_{0,j+2}$ | ${}^rP_{0,j+3}$ |
| ${}^rT_{0,j}$ | ${}^rT_{0,j+1}$ | ${}^rT_{0,j+2}$ | ${}^rT_{0,j+3}$ |

x MC

| ${}^rQ_{0,j}$ | ${}^rQ_{0,j+1}$ | ${}^rQ_{0,j+2}$ | ${}^rQ_{0,j+3}$ |

$y_0$     $y_1$     $y_2$     $y_3$

Figure 2 (prior art)

$C$    $f$    →    $f(C)$

AES$^{-1}$    $K$   $f$ →   $f(K)$    Dual AES$^{-1}$

$P$    $f^{-1}$   ←   $f(P)$

Figure 3 (prior art)

$x_0$    $x_1$    $x_2$    $x_3$

| $^rP_{0,j}$ | $^rP_{0,j+1}$ | $^rP_{0,j+2}$ | $^rP_{0,j+3}$ |

| $_iT_{0,j}$ | $_iT_{0,j+1}$ | $_iT_{0,j+2}$ | $_iT_{0,j+3}$ |

$$\times MC_f$$

| $^rQ_{0,j}$ | $^rQ_{0,j+1}$ | $^rQ_{0,j+2}$ | $^rQ_{0,j+3}$ |

$y_0$    $y_1$    $y_2$    $y_3$

Figure 4

100

I/O 110

CPU
120

Mem.
130

140

Figure 5

Europäisches
Patentamt
European
Patent Office
Office européen
des brevets

# EUROPEAN SEARCH REPORT

**Application Number**

EP 10 30 5196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BILLET O ET AL: "A Traceable Block Cipher" ASIACRYPT. INTERNATIONAL CONFERENCE ON THE THEORY AND APPLICATIONOF CRYPTOLOGY AND INFORMATION SECURITY, X, XX, 1 November 2003 (2003-11-01), pages 331-346, XP002273113 * pages 336-338; figure 3 * ----- | 1-8,13, 14 | INV. H04L9/06 |
| T | PATARIN J ED - COPPERSMITH D (ED): "CRYPTANALYSIS OF THE MATSUMOTO AND IMAI PUBLIC KEY SCHEME OF EUROCRYPT'88" ADVANCES IN CRYPTOLOGY - CRYPTO '95. SANTA BARBARA, AUG. 27 - 31, 1995; [PROCEEDINGS OF THE ANNUAL INTERNATIONAL CRYPTOLOGY CONFERENCE (CRYPTO)], BERLIN, SPRINGER, DE, vol. 963, 27 August 1995 (1995-08-27), pages 248-261, XP000605562 ISBN: 978-3-540-60221-7 * section 2.2 * ----- | | |

**TECHNICAL FIELDS SEARCHED (IPC)**

H04L

The present search report has been drawn up for all claims

| Place of search | Date of completion of the search | Examiner |
|---|---|---|
| Munich | 19 May 2010 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. Chow ; P. Eisen ; H. Johnson ; P.C. van Oorschot.** A White-Box DES Implementation for DRM Application. *Digital Rights Managerment Work-Shop-DRM 2002,* 2003, vol. 2696, 1-15
- **S. Chow ; P. Eisen ; H. Johnson ; P.C. van Oorschot.** White-Box Cryptography and an AES Implementation. *Selected Areas in Cryptography-SAC 2002,* 2003, vol. 2595, 250-270
- Cryptanalysis of a White Box AES Implementation. **O. Billet ; H. Gilbert ; C. Ech-Chatbi.** Selected Areas in Cryptography-SAC 2004. 2005, vol. 3357, 227-240
- Advanced Encryption standard. National Institute of Standards and Technology, 2001
- **E. Barkan ; E. Biham.** In How Many Ways Can You Write Rijndael?. *Asiacrypt,* 2002, 160-175